(19) Europäisches Patentamt
European Patent Office
Office européen des brevets

(11) EP 1 597 038 B1

(12) **FASCICULE DE BREVET EUROPEEN**

(45) Date de publication et mention de la délivrance du brevet:
**05.07.2006 Bulletin 2006/27**

(21) Numéro de dépôt: **04709962.7**

(22) Date de dépôt: **11.02.2004**

(51) Int Cl.:
***B27K 3/15*** *(2006.01)*

(86) Numéro de dépôt international:
**PCT/BE2004/000019**

(87) Numéro de publication internationale:
**WO 2004/071728 (26.08.2004 Gazette 2004/35)**

(54) **PROCEDE DE TRAITEMENT D UN ELEMENT EN BOIS**

VERFAHREN ZUR BEHANDLUNG EINES HOLZELEMENTS

METHOD FOR TREATING A WOODEN ELEMENT

(84) Etats contractants désignés:
**AT BE BG CH CY CZ DE DK EE ES FI FR GB GR HU IE IT LI LU MC NL PT RO SE SI SK TR**

(30) Priorité: **11.02.2003 EP 03447024**

(43) Date de publication de la demande:
**23.11.2005 Bulletin 2005/47**

(73) Titulaire: **Materia Nova A.S.B.L**
**7000 Mons (BE)**

(72) Inventeurs:
- **PERSENAIRE, Olivier**
**La Louviere 7100 (BE)**
- **DUBOIS, Philippe**
**Braives 4260 (BE)**

(74) Mandataire: **pronovem**
**Office Van Malderen**
**Avenue Josse Goffin 158**
**1082 Bruxelles (BE)**

(56) Documents cités:
**WO-A-97/02134**
**DE-A- 2 007 591**
**US-A- 3 157 613**
**US-B1- 6 191 213**
**US-B1- 6 322 803**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### Objet de l'invention

La présente invention se rapporte à un procédé de traitement d'un élément en bois, de préférence en bois dit « debout » c'est-à-dire coupé dans son sens naturel de pousse, donc transversalement à la direction des fibres.

### Etat de la technique

Il est connu de l'homme de l'art que le bois est sensible aux variations d'humidité, ce qui se traduit par une instabilité dimensionnelle c'est-à-dire par un gonflement ou au contraire par une rétraction de ce bois.

De ce fait, différents procédés de traitement du bois ont déjà été proposés en vue d'augmenter sa stabilité dimensionnelle. Parmi ces procédés, il a notamment été suggéré d'imprégner le bois avec différents polyuréthannes. On citera à titre d'exemples les documents US 5,310,780, US 6,191,213, JP49016603, GB1372840, US 3,795,533 et WO 97/02134. Ces procédés ont en commun qu'ils comprennent plusieurs étapes et qu'ils utilisent des solvants organiques. Selon le cas, le polyuréthanne est :

- soit préformé et non greffé aux parois cellulaires du bois ;
- soit préformé et greffé ;
- soit généré *in-situ* ce qui permet également un éventuel greffage.

Le document DE 2 059 625 décrit un procédé pour former une mousse de polyuréthanne obtenue en immergeant du bois dans une solution organique comprenant les réactifs nécessaires à la formation *in situ* de polyuréthanne et en utilisant l'eau contenue dans le bois pour la réaction.

Malheureusement, beaucoup de ces procédés conduisent à un remplissage du lumen du bois plutôt qu'au gonflement des parois cellulaires ce qui, d'une part, empêche d'atteindre une stabilisation dimensionnelle élevée, et d'autre part a un effet néfaste à la fois sur la densité et l'aspect du matériau final.

Il a également été proposé d'utiliser des polyalkylène glycols dans le procédé d'imprégnation, comme c'est le cas dans le document de Danicher L. & Lambla M. (*Revue du bois* **3**, 33 (1975)). Ce type de procédé combine les avantages d'être facile à réaliser à l'échelle industrielle et de conférer au bois un degré de stabilisation élevé. Néanmoins, lorsque le bois est placé dans des conditions d'humidité ambiante relative proches de la saturation, les polyéthylène glycols qui sont des composés très hygroscopiques, ont tendance à diffuser à l'extérieur du bois, ce qui entraîne un gonflement de celui-ci. Par ailleurs et de manière désavantageuse, ce procédé nécessite l'utilisation d'un solvant organique tel que le dichlorométhane.

Le brevet belge BE 799.494 décrit un procédé de traitement en deux étapes. Dans une première étape, des oligomères de polyéthylène glycol sont incorporés au bois via une imprégnation osmotique et, dans une seconde étape, un polyuréthanne est formé par exposition du bois à des vapeurs de diisocyanate produites sous pression réduite, à une température supérieure à 90°C. Ce procédé présente l'inconvénient d'être long et délicat à mettre en oeuvre. En outre, ce procédé aboutit à une imprégnation inhomogène sur l'épaisseur du bois, la formation du polyuréthanne étant largement favorisée en surface et à proximité de celle-ci. Enfin, l'utilisation de diisocyanate à l'état de vapeur n'offre pas toutes les garanties satisfaisantes en terme de sécurité et de respect de l'environnement.

Le document DE 2 007 591 décrit un procédé d'imprégnation du bois par une solution de polyuréthane thermodurcissable comprenant sous forme de micro-capsules un isocyanate agissant comme agent durcisseur, l'imprégnation étant initiée par une élévation de la température. Une étape de durcissement est ensuite effectuée par élévation de la température et de la pression de façon à rompre les micro-capsules et libérer l'agent durcisseur qui se mélange au polyuréthane thermodurcissable à l'intérieur des pores du bois.

### Buts de l'invention

La présente invention vise à fournir un procédé de traitement d'un élément en bois qui ne présente pas les inconvénients des procédés de l'état de la technique tels qu'ils ont été exposés ci-dessus.

En particulier, la présente invention vise à fournir un procédé qui permette d'obtenir un bois imprégné qui présente un degré élevé de stabilité dimensionnelle.

Elle vise également à fournir un procédé qui soit rapide et simple à mettre en oeuvre.

Un autre but de la présente invention est de fournir un procédé qui respecte au mieux l'environnement, en évitant notamment le recours à des solvants organiques.

## Définitions

Le terme de « bois » recouvre toutes les essences de feuillus comme de résineux, notamment les bois perméables et le bois dit « debout » .

Ce bois peut être notamment à l'état vert ou saturé en eau.

Par bois « debout », il y a lieu d'entendre des tronçons de bois qui ont été débités transversalement à la direction de leurs fibres.

On entend par « élément en bois » , tous les éléments à base de bois c'est-à-dire non seulement des morceaux de bois « brut » qui ont été débités d'un arbre, mais également du bois ayant subi une transformation industrielle tel que du parquet, des panneaux ou des plans de travail (c'est-à-dire les produits dérivés du bois).

On entend par « imprégnation » l'action de faire pénétrer une ou plusieurs substances à l'intérieur du bois. Ici, lesdites substances sont des constituants d'une composition dite « composition d'imprégnation ».

On entend par « réseau » une structuration en trois dimensions de chaînes de polymères qui sont reliées entre elles soit par des liaisons covalentes, on parle alors de « réseau chimique » ou de «réseau réticulé », soit par des liaisons faibles de type « liaisons hydrogène », et on parle alors de « réseau physique ». Un même réseau peut être à la fois de type physique et de type chimique.

Les chaînes de polymères qui forment un réseau au sein du bois peuvent être soit uniquement des chaînes de polymères exogènes, soit également des chaînes de polymères endogènes constitutives des parois cellulaires du bois tels que la cellulose du bois. Dans ce dernier cas, lorsque des liaisons covalentes sont formées entre les chaînes de polymère exogène et la cellulose du bois, on dit que le polymère exogène est « greffé » au bois ou à la cellulose du bois. Plus généralement, la notion de « greffage » suppose que le polymère exogène présente au moins un hydrogène actif apte à former une liaison covalente avec au moins une molécule constitutive des parois cellulaires du bois, telle que la cellulose.

Il y a donc lieu de comprendre dans la présente invention par « réticulation » l'action de lier covalemment entre elles des chaînes de polymère, ici de polyuréthanne, de façon à former un réseau.

On doit comprendre par ailleurs que les termes « bain d'imprégnation » désignent un bain aqueux dont la composition est telle qu'elle contient à la fois le polyol et le polyisocyanate qui imprégneront directement en une seule fois le bois et qui pourront ensuite dans des conditions d'utilisation particulières réagir *in situ* au sein du bois l'un avec l'autre pour former le polyuréthanne et permettre sa polymérisation, sa réticulation et/ou son greffage au sein du bois.

L'expression « hydrogène actif » est utilisée pour qualifier un hydrogène appartenant à une molécule et susceptible de réagir avec un groupe chimique appartenant à une autre molécule.

On entend par polyisocyanate « bloqué » ou « protégé » un polyisocyanate dont les fonctions isocyanates ont été protégées par un agent dit « agent bloquant » de manière à les rendre inertes vis-à-vis d'hydrogènes actifs. Ce blocage ou cette protection est réversible. On parle alors de « déblocage » ou de « déprotection » des fonctions isocyanates.

De façon générale, on se référera au chapitre sur les polyuréthannes écrit par Daniel HATAT (*Techniques de l'ingénieur* n°A 3425 Volume AM 2) pour la terminologie chimique utilisée ici.

## Résumé de l'invention

La présente invention se rapporte un procédé de traitement d'un élément en boisl tel que defini dans les revendications; ledit procédé s'applique, en particulier aux élements en bois dit « debout », et comprend les étapes suivantes :

- imprégnation par immersion dudit élément de bois dans un bain contenant une composition aqueuse comprenant au moins un premier constituant correspondant à un polyol et au moins un second constituant correspondant au carbonyle-bis caprolactame (CBC), un polyisocyanate bloqué (ou protégé), et susceptible de réagir dans certaines conditions avec ledit premier constituant pour former un polyuréthanne, le second constituant étant non réactif vis-à-vis dudit premier constituant et inerte vis-à-vis de l'eau dans cette étape d'imprégnation;
- retrait du bain d'imprégnation et déshydratation dudit élément de bois ;
- formation d'un réseau de polyuréthanne au sein de l'élément de bois ainsi imprégné en faisant réagir ledit premier constituant avec ledit second constituant par une élévation de température.

Avantageusement selon l'invention, le bois de l'élément de bois est à l'état vert ou saturé en eau.

De préference, le premier constituant de la composition d'imprégnation est un polyol hydrosoluble comprenant un ou plusieurs hydrogènes actifs et sélectionné parmi le groupe constitué par les polyéthers mono- et polyols, les polyacryliques mono- et polyols, les polyvinyliques mono- et polyols, les polysaccharides, les dérivés de ceux-ci dans lesquels au moins une fonction hydroxyle est substituée par une fonction thiol ou amine, ainsi que les mélanges et les

copolymères de ceux-ci.

De façon avantageuse, le premier constitutant de la composition d'imprégnation est un oligomère de poids moléculaire compris entre 100 et 5000, et de préférence entre 200 et 1000.

Selon l'invention, ledit second constituant est carbonyl bis-caprolactame (ou CBC).

De préférence, dans le procédé de la présente invention, chacun des premier et second constituants est présent dans la composition aqueuse d'imprégnation à une concentration comprise entre $10^{-3}$ et 5 $mol.l^{-1}$, et de préférence entre 0.1 et 1 $mol.l^{-1}$.

De préférence, l'étape d'imprégnation est effectuée à une température comprise entre 0°C et 100°C, et de préférence entre 20°C et 60°C.

De façon avantageuse, l'étape d'imprégnation est effectuée à température ambiante.

De préférence, la durée de l'étape de traitement thermique est comprise entre 10 minutes et 72 heures, et de préférence entre 1 et 24 heures.

De préférence, l'étape d'imprégnation est effectuée à une pression comprise généralement entre $10^{-3}$ et $10^2$ bars, et de préférence entre 0.1 et 10 bars.

De façon avantageuse, l'étape d'imprégnation est effectuée à pression atmosphérique.

De préférence, dans le procédé de l'invention, ledit traitement thermique est réalisé à une température comprise entre 50°C et 250°C, et de préférence entre 100°C et 150°C, et dont la durée est prédéterminée.

De préférence, la durée de l'étape de traitement thermique est comprise entre 5 minutes et 5 heures, et de préférence entre 15 minutes et 120 minutes.

De préférence, ledit traitement est effectué à une pression comprise généralement entre $10^{-3}$ et $10^2$ bars, et de préférence entre 0.1 et 10 bars.

De préférence, la déshydratation de l'élément en bois est réalisée par chauffage ou par dépressurisation.

La présente invention se rapporte également à un élément en bois obtenu à l'aide du procédé de l'invention tel que décrit ci-dessus.

Un autre objet de l'invention concerne un bain d'imprégnation tel que défini dans les revendications comprenant une composition d'imprégnation pour mettre en oeuvre le procédé selon l'invention, la présente invention concernant aussi ladite composition elle-même.

Selon l'invention, cette composition est une solution aqueuse comprenant au moins un premier constituant correspondant à un polyol et au moins un second constituant correspondant au CBC dont les fonctions isocyanates sont protégées de manière à rendre ledit CBC inerte vis-à-vis de l'eau et vis-à-vis de la ou des fonctions alcools dudit premier constituant à température ambiante, lesdites fonctions isocyanates dans des conditions particulières d'utilisation étant susceptibles d'être déprotégées et de réagir ainsi avec la ou les fonctions alcools dudit premier constituant pour former un polyuréthanne.

Enfin, la présente invention se rapporte aussi à l'utilisation de l'élément en bois et/ou du bain d'imprégnation selon l'invention dans le domaine des revêtements, tels que les revêtements de mur et/ou de sols, les parquets, les plans de travail, les panneaux, et les meubles.

## Brève description des figures

La figure 1 représente une microphotographie SEM d'une coupe transversale de bois imprégné de polyéthylène glycol (PEG) après extraction Soxhlet suivant l'exemple 1.

La figure 2 représente une microphotographie SEM d'une coupe transversale de bois imprégné de façon séquentielle de façon à former du polyuréthanne *in situ* selon l'exemple 2.

La figure 3 représente une microphotographie SEM d'une coupe transversale de bois traité, obtenu par imprégnation « one pot » selon le procédé de l'invention de façon à former du polyuréthanne *in situ* selon l'exemple 3.

## Description détaillée de l'invention

La particularité du procédé de l'invention est donc que l'imprégnation du bois pour former ensuite un réseau de polyuréthanne au sein du bois est réalisée en une seule étape et en phase aqueuse. Les constituants de la composition d'imprégnation utilisés pour imprégner le bois, c'est-à-dire à la fois le polyol et le polyisocyanate bloqué, sont des composés solubles dans l'eau ou dispersables en phase aqueuse, ledit polyisocyanate étant réactif vis-à-vis du polyol dans certaines conditions d'utilisation.

En d'autres termes, le procédé selon la présente invention correspond à un procédé d'imprégnation dit « one-pot ».

Cette imprégnation « one-pot » conduit à des résultats tout à fait surprenants et inattendus en terme au moins de stabilité dimensionnelle du bois et éventuellement de propriétés mécaniques du bois, qui s'expliquent en partie par un effet synergique entre l'eau, le polyol et le polyisocyanate, puisque ces résultats ne se retrouvent pas lorsque le bois

est imprégné séquentiellement de polyol et de polyisocyanate (voir les exemples ci-dessous).

On notera que le bain d'imprégnation peut également comprendre un catalyseur tel que ceux utilisés dans l'état de l'art. Par exemple, les dérivés à base d'étain (IV) ou de type amine tertiaire peuvent également être incorporés au bain, ainsi que les acides de Lewis tels que le $MgBr_2$.

Les constituants compris dans le bain d'imprégnation peuvent être utilisés dans des rapports molaires variables que l'homme de métier pourra facilement déterminer de façon à ajuster le rapport molaire des fonctions réactives.

De façon générale, il a été observé que la porosité et, par conséquent, la densité du bois influencent fortement les conditions expérimentales à employer.

En outre, de façon avantageuse, la concentration du polyisocyanate dans le bain d'imprégnation est telle que le rapport molaire des fonctions isocyanates et des fonctions ayant un hydrogène actif varie entre 0.1 et 15, et de préférence entre 1 et 5.

On notera que l'imprégnation et la réticulation peuvent se faire sous agitation, par exemple sous agitation mécanique.

Le traitement thermique auquel est soumis le bois imprégné à l'issue de l'étape d'imprégnation permet la déprotection et/ou l'activation des fonctions isocyanates du polyisocyanate (« débloquage ») et engendre la formation au sein du bois d'un polyuréthanne réticulé, via des liens allophanates ou biurets.

A l'issue de la mise en oeuvre du procédé selon l'invention, il se forme donc au sein de l'élément en bois un réseau interpénétré entre les chaînes polyuréthannes et les polymères constitutifs des parois cellulaires du bois, pouvant impliquer des réactions de greffage covalent en fonction de la stoechiométrie isocyanate/alcool initiale.

De façon tout à fait surprenante, le procédé de traitement selon l'invention, grâce à la constitution de ce réseau, permet d'améliorer la stabilité dimensionnelle du bois (et donc de l'élément en bois) et ce, sans affecter ses propriétés mécaniques ni son aspect, ce qui est particulièrement intéressant. Les propriétés mécaniques peuvent de l'élément en bois peuvent même dans certaines conditions être améliorées.

De plus, il a été observé que le procédé selon l'invention induit uniquement le gonflement des parois cellulaires du bois sans remplissage du lumen par le polyuréthanne. De ce fait, il est possible de maintenir la densité du bois imprégné à une valeur peu élevée et relativement proche de la densité du bois dans les conditions d'humidité ambiante.

Selon l'invention, on peut ensuite prévoir d'appliquer un revêtement en surface de l'élément en bois imprégné de la manière décrite ci-dessus. Ce revêtement, appliqué selon les techniques bien connues de l'état de la technique peut être soit un vernis (polyuréthanne ou autres), soit une peinture.

## Exemples de réalisation

On notera que dans ces exemples, la stabilité dimensionnelle d'échantillons de peuplier non traités et traités a été mesurée en soumettant ces échantillons à deux cycles « mouillage-séchage ». Plus précisément, les échantillons ont été soit soumis dans une enceinte à une atmosphère humide à taux d'humidité constant (90%) soit immergés dans un bain d'eau courante (25°C) pendant un temps donné et -ce-à deux reprises. Chaque cycle a une durée de 41 heures. Afin de caractériser de manière précise l'amélioration de stabilité dimensionnelle engendrée par le traitement par imprégnation réactive en phase liquide, c'est l'efficacité d'anti-gonflement ASE (anti-swelling efficiency) qui a été déterminée pour chaque cycle selon les recommandations trouvées dans la littérature scientifique (*Dimensional stabilization of wood in use,* Research Note FPL-0243, forest Products Laboratory, United States Department of Agriculture, Madison (WI), 1981). A chaque cycle correspond donc une valeur $ASE_1$ ($1^{er}$ cycle) ou $ASE_2$ ($2^{ème}$ cycle).

L'efficacité d'anti-gonflement (« antiswelling efficiency » ou « ASE ») a été calculée de la manière décrite ci-après.

Premièrement, le coefficient de gonflement est déterminé via l'équation 1.

$$S = \frac{V_2 - V_1}{V_1} \qquad \text{Equation 1}$$

où

S = coefficient de gonflement volumétrique

$V_2$ = volume de l'échantillon de bois après mouillage

$V_1$ = volume de l'échantillon de bois séché avant mouillage

Il est alors possible de calculer la valeur de ASE par l'intermédiaire de l'équation 2.

$$ASE = \left|\frac{S_2 - S_1}{S_1}\right| \qquad \text{Equation 2}$$

où
ASE = efficacité d'anti-gonflement résultant du traitement du bois
$S_2$ = coefficient de gonflement volumétrique du bois traité
$S_1$ = coefficient de gonflement volumétrique du bois non traité

Exemples comparatifs

*Exemple 1- imprégnation* au *PEG*

Un échantillon A de peuplier *(populus* spp.) de 60 x 60 x 10 $mm^3$ (radial x tangentielle x longitudinale) a été imprégné de polyéthylène glycol (PEG) 400 par immersion dans une solution aqueuse de ce dernier d'une concentration de 0.75 $mol.L^{-1}$. Après une durée d'imprégnation de 24h, la fraction en poids de PEG était de 57.8 % et la masse volumique de l'échantillon de bois de 0.48 $g.cm^{-3}$.

Après une extraction Soxhlet à l'aide d'eau pendant 48h, la totalité du PEG incorporé a été extraite ce qui atteste de la nécessité d'utiliser un polyisocyanate pour former des chaînes polyuréthannes réticulées et chimiquement greffées aux parois cellulaires du bois ainsi qu'un réseau interpénétré entre ces mêmes chaînes et les polymères constitutifs des parois cellulaires.

La figure 1 présente une microphotographie SEM de cet échantillon. Ainsi que le montre cette figure, les parois cellulaires du bois ne sont pas gonflées. Leur épaisseur est en fait identique à celle des parois cellulaires du bois non traité, à savoir d'environ 1.5 μm.

*Exemple 2- Imprégnation séquencée utilisant le CBC* comme *polyisocyanate protégé*

Un échantillon de peuplier N (populus spp.) de 60 x 60 x 10 $mm^3$ (radial x tangentielle x longitudinale) a été imprégné, en autoclave, de PEG 400 par immersion dans une solution aqueuse (0.5 $mol.L^{-1}$) de ce dernier pendant 2h30 sous une pression de 6 bars. Passé ce délai, cet échantillon a été imprégné en autoclave d'un diisocyanate protégé, le carbonyle biscaprolactame ou CBC (voir formule ci-dessous) par immersion dans une dispersion aqueuse de ce dernier (12.6 %poids de CBC) pendant 2h30 sous une pression de 6 bars. L'échantillon a alors été séché à 70°C sous vide pendant 1h30 et un traitement thermique à 150°C (sous vide) a été effectué.

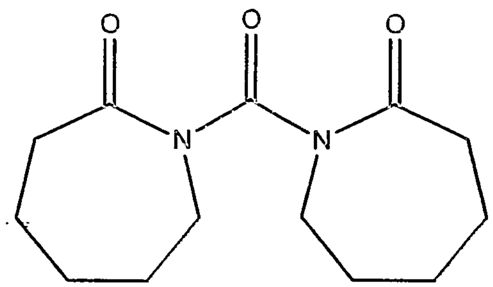

formule du carbonyle biscaprolactame ou CBC

La fraction en poids de polyuréthanne obtenue était de 39.2%. La perte de masse après extraction Soxhlet était de supérieure à 99%.

Ces résultats témoignent de la nécessité d'effectuer les imprégnations au polyol et au CBC simultanément, c'est-à-dire à partir d'un seul et même bain d'imprégnation, afin de garantir l'incorporation adéquate du polyuréthanne au sein du bois ainsi que son greffage et sa réticulation.

La figure 2 correspond à une microphotographie SEM prise de l'échantillon ainsi traité. Comparée à une microphotographie d'un échantillon de bois imprégnée avec seulement du PEG telle que présentée à la fig.1. (voir Exemple 1), la fig.2 confirme que le bois traité n'a pas été imprégné de façon homogène et que la formation d'un réseau de polyuréthanne y est peu importante. On y observe un très faible gonflement des parois cellulaires du bois, l'épaisseur

mesurée des parois n'étant que d'environ 1.8 μm.

Exemples d'imprégnation « one-pot » selon l'invention

Exemples 3 à 7 Utilisation du carbonyle-biscaprolactame (CBC) comme isocyanate protégé :

*Exemple 3- Tests de stabilité dimensionnelle* :

Un échantillon L de peuplier *(populus* spp.) de 60 x 60 x 10 $mm^3$ (radial x tangentielle x longitudinale) a été imprégné de PEG 400 fonctionnalisé par le carbonyle-biscaprolactame (CBC). Pour ce faire, les oligomères de PEG (20 g), préalablement déshydratés, sont mis en réaction avec 25.20 g de CBC sous azote et la réaction menée à 150°C pendant 1h30. Le principe de cette réaction est le suivant :

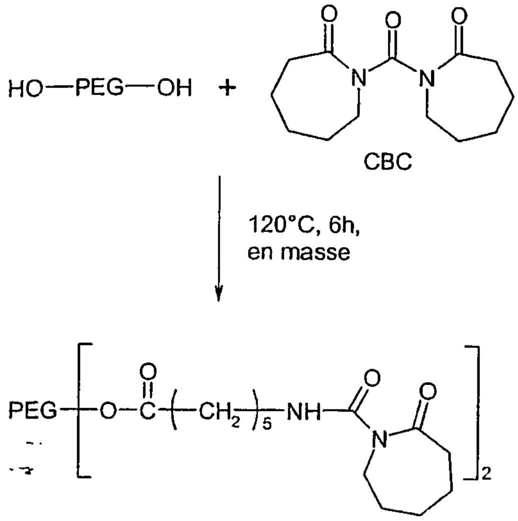


Les oligomères de PEG ainsi fonctionnalisés ont été dispersés dans 200 ml d'une solution de PEG 400 afin d'obtenir une concentration totale en PEG de 0.5 $mol.L^{-1}$. Ce mélange a ensuite été introduit dans un autoclave en acier inox (capacité : 1.2 L) contenant l'échantillon de bois. L'imprégnation a alors été effectuée à température ambiante sous une pression de 6 bars et ce pendant 2h30. Passé ce délai, le bois a été déshydraté à 70°C sous vide pendant 1h30 et un traitement thermique a été réalisé pendant 16h à 150°C. La fraction en poids de polyuréthanne obtenue était de 110.7%.

Les valeurs de ASE et de perte de masse après l'extraction Soxhlet sont reprises au Tableau 1.

**Tableau 1 : Stabilité dimensionnelle, tests d'extraction Soxhlet et masse volumique.**

| Echantillon | (a) Test | (b) $ASE_1$ (%) | (c) $ASE_2$ (%) | (d) Δm (%) | (e) ρ ($g.cm^{-3}$) |
|---|---|---|---|---|---|
| L | humidité | 63±11 | 69±6 | 28 | 0.6 |
| | immersion | 82±8 | 38±2 | | |

(a) échantillon placé dans une enceinte sous une atmosphère humide à taux d'humidité constant (90%) (« humidité ») ou immergé dans un bain d'eau courante (25°C) pendant-un temps donné (« immersion »)
(b) efficacité d'anti-gonflement à l'issue du 1er cycle « mouillage-séchage »
(c) efficacité d'anti-gonflement à l'issue du 2nd cycle « mouillage-séchage »
(d) perte en masse de polyuréthanne PU (= masse de PU extrait/masse de PU initiale)
(e) densité

Ainsi que le montrent les résultats du tableau 1, le bois après un traitement selon l'invention présente une stabilité dimensionnelle accrue. On notera que les valeurs de ASE obtenues ici pour un bois traité selon le procédé de l'invention varient entre environ 40% et environ 85% et sont comparables à celles généralement rapportées dans l'état

de la technique pour d'autres procédés d'imprégnation. En effet, la valeur de ASE est d'environ 38% dans le cas d'une imprégnation à l'aide de chaînes perfluoroalkyles (Engonga P.E. *et al.* (2000), *J.Fluor.Chem.* **101**, 19) et ne dépasse pas 70% après imprégnation du bois par des époxydes ou des isocyanates (Rowell R.M. & Ellis W.D. (1979), *Wood Sci.* **12**, 52).

L'utilisation du CBC donne donc de très bons résultats en terme de stabilité dimensionnelle du bois.

De plus, ces résultats comparés à ceux obtenus à l'exemple 2 dans lequel on imprégnait l'échantillon de bois avec du PEG et du polyisocyanate bloqué au CBC non pas de façon simultanée comme ici mais de façon séquentielle, suggèrent que de façon tout à fait inattendue il existe un effet synergique entre l'eau, le polyol et le polyisocyanate pour former un réseau de polyuréthanne au coeur du bois.

La microphotographie (obtenue par microscopie électronique à balayage) d'une coupe transversale de bois ainsi imprégné est présentée à la figure 3. Aucun remplissage du lumen ne peut être observé mais bien un important gonflement des parois cellulaires du bois, gonflement attendu pour conduire à l'amélioration de stabilité dimensionnelle du bois. Les parois cellulaires atteignent, dans ce cas, une épaisseur de l'ordre de 2.5 $\mu$m. On s'attend d'ailleurs à ce que ce gonflement s'accompagne également d'une amélioration des propriétés mécaniques du bois, ce qui sera confirmé lors des tests de flexion et de compression réalisés à l'exemple 5.

En outre, ces observations confirment la formation d'un réseau interpénétré au sein même des parois cellulaires du bois sans remplissage du lumen, et cela, directement par imprégnation « one-pot » en phase aqueuse. Par ailleurs, il est à noter que cette imprégnation se déroule de manière homogène sur toute l'épaisseur de l'échantillon, ce qui est une caractéristique importante de la présente invention.

Pour comparaison, on se reportera à la Fig.2 qui présentait ainsi que décrit ci-dessus la microphotographie SEM d'une coupe transversale de l'échantillon de bois repris à l'exemple 2 et qui mettait en évidence un très faible gonflement des parois cellulaires du bois.

*Exemple 4- autres tests de stabilité dimensionnelle :*

Un échantillon M de peuplier (populus spp.) de 60 x 60 x 10 $mm^3$ (radial x tangentielle x longitudinale) a été imprégné de PEG 400 fonctionnalisé par le carbonyle-biscaprolactame (CBC). Pour ce faire, les oligomères de PEG séchés (20 g) sont mis en réaction avec 25.20 g de CBC sous azote et la réaction menée à 150°C pendant 1h30.

Les oligomères de PEG fonctionnalisés ont été dispersés dans 200 ml d'une solution de PEG 400 afin d'obtenir une concentration totale en PEG de 0.5 $mol.L^{-1}$. Ce mélange a ensuite été introduit dans un autoclave contenant l'échantillon de bois. L'imprégnation a alors été effectuée à température ambiante sous une pression de 6 bars et ce pendant 2h30. Passé ce délai, le bois a été déshydraté à 70°C sous vide pendant 1h30 min et un traitement thermique a été réalisé pendant 1h30 à 150°C. La fraction en poids de polyuréthanne obtenue était de 132.4%.

A l'instar de l'échantillon L (exemple 3), l'échantillon M présente une stabilité dimensionnelle élevée, comme le montre le tableau 2. Ces résultats confirment que le carbonyl-biscaprolactame est un excellent candidat comme polyisocyanate protégé dans le procédé selon l'invention.

**Tableau 2 : Stabilité dimensionnelle, tests d'extraction Soxhlet et masse volumique.**

| Echantillon | (a) Test | (b) $ASE_1$ (%) | (c) $ASE_2$ (%) | (d) $\Delta m$ (%) | (e) $\rho$ ($g.cm^{-3}$) |
|---|---|---|---|---|---|
| M | humidité | $62\pm15$ | $82\pm22$ | 59 | 0.6 |
| | immersion | $69\pm22$ | $46\pm5$ | | |

*Exemple 5- Evaluation des propriétés mécaniques*

Les propriétés mécaniques d'échantillons de bois imprégné présentant des fractions en poids de polyuréthanne différentes ont été évaluées par le biais de tests de flexion (parallèle aux fibres) et de compression (perpendiculaire aux fibres). Les résultats obtenus pour ces composites sont comparés à ceux obtenus le peuplier non traité.

Les tests de flexion ont été effectués sur 4 éprouvettes de 54 x 10 x 10 $mm^3$ (axial x radial x tangentiel) préalablement conditionnées à un taux d'humidité de 40% et une température de 20°C pendant 24h. Les résultats sont présentés au tableau 3.

Comme on peut le constater et contrairement à de nombreuses autres modifications chimiques, l'imprégnation au polyuréthanne n'altère pas les propriétés mécaniques du bois.

**Tableau 3 : Tests de flexion**

| *Echantillon* | *(h) $Fw_{PU}$ (%)* | *Module d'Young (MFa)* (I) | *Déflexion à la rupture (%)* |
|---|---|---|---|
| Peuplier non traité | 0 | 98± 9 | 15± 3 |
| C6 | 113 | 110± 15 | 14 ± 1 |
| C7 | 89 | 96 ± 11 | 14 ± 1 |

(i) défini comme étant la plus grande pente de la courbe « Contrainte-Déflexion »
(h) fraction en poids de polyuréthanne

Les tests de compression ont été effectués sur 4 éprouvettes de 10 x 18 x 10 $mm^3$ (axial x radial x tangentiel) conditionnées à un taux d'humidité de 40% et une température de 20°C pendant 24h. La contrainte est appliquée perpendiculairement aux fibres et parallèlement à la direction tangentielle. Les résultats obtenus sont repris au tableau 4.

Les résultats confirment que l'imprégnation au polyuréthanne n'altère pas les propriétés mécaniques du bois, une légère augmentation du module d'Young est même observée dans le cas du composite C7.

**Tableau 4: Tests de compression**

| *Echanfillon* | *(h) $FW_{PU}$ (%)* | *(j) Module d'Young (MPa)* a |
|---|---|---|
| Peuplier non traité | 0 | 79 ± 7 |
| C6 | 113 | 109 ± 23 |
| C7 | 90 | 116 ± 7 |

(j) défini comme étant la plus grande pente de la courbe « Contrainte-Déformation »
(h) fraction en poids de polyuréthanne

*Exemple 6- autres tests :*

Un échantillon N de peuplier *(populus* spp.) de 60 x 60 x 10 $mm^3$ (radial x tangentielle x longitudinale) a été imprégné de PEG 1000 fonctionnalisé par le carbonyle-biscaprolactame (CBC). Pour ce faire, les oligomères de PEG séchés (100 g) sont mis en réaction avec 50.40 g de CBC sous azote et la réaction menée à 150°C pendant 1h30 en présence de $MgBr_2$ (0.75 mol% par rapport au CBC).

Les oligomères de PEG fonctionnalisés ont été dispersés dans 200 ml d'une solution de PEG 1000 afin d'obtenir une concentration totale en PEG de 0.5 $mol.L^{-1}$. Ce mélange a ensuite été introduit dans un autoclave contenant l'échantillon de bois. L'imprégnation a alors été effectuée à température ambiante sous une pression de 6 bars et ce pendant 2h30. Passé ce délai, le bois a été déshydraté à 70°C sous vide pendant 1h30 min et un traitement thermique a été réalisé pendant 1h30 à 150°C. La fraction en poids de polyuréthane obtenue était de 88.3%. Tel que reporté au tableau 10, l'échantillon obtenu présente une stabilité dimensionnelle élevée.

**Tableau 5 : Stabilité dimensionnelle, tests d'extraction Soxhlet et masse volumique.**

| Echantillon | Test | $ASE_1$ (%) | $ASE_2$ (%) | Δm (%) | p ($g.cm^{-3}$) |
|---|---|---|---|---|---|
| N | humidité | 63±5 | 57±9 | 90 | 0.5 |
| | immersion | 69±6 | 38±2 | | |

*Exemple 7- autres tests :*

Un échantillon O de peuplier (*populus* spp.) de 60 x 60 x 10 $mm^3$ (radial x tangentielle x longitudinale) a été imprégné de PEG 1000 fonctionnalisé par le carbonyle-biscaprolactame (CBC). Pour ce faire, les oligomères de PEG séchés (100 g) sont mis en réaction avec 50.40 g de CBC sous azote et la réaction menée à 150°C pendant 1h30 en présence de $MgBr_2$ (0.75 mol% par rapport au CBC).

Les oligomères de PEG fonctionnalisés ont été dispersés dans 200 ml d'une solution de PEG 1000 afin d'obtenir une concentration totale en PEG de 0.5 $mol.L^{-1}$. L'échantillon de bois a été immergé dans ce mélange. L'imprégnation a alors été effectuée à température ambiante et à pression atmosphérique pendant 2h30. Passé ce délai, le bois a été déshydraté à 70°C sous vide pendant 1h30 min et un traitement thermique a été réalisé pendant 1h30 à 150°C. La fraction en poids de polyuréthane obtenue était de 73.3%. Tel que reporté au tableau 11, l'échantillon obtenu présente

une stabilité dimensionnelle élevée.

**Tableau 6 : Stabilité dimensionnelle, tests d'extraction Soxhlet et masse volumique.**

| Echantillon | Test | $ASE_1$ (%) | $ASE_2$ (%) | $\Delta m$ (%) | $\rho$ ($g.cm^{-3}$) |
|---|---|---|---|---|---|
| O | humidité | 57±19 | 63±12 | 59 | 0.4 |
| | immersion | 53±8.0 | 36±1 | | |

*Exemples 8 et 9 : utilisation d'autres polyisocyanates protégés :*

*Exemple 8- utilisation du Rhodocoat® comme polyisocyanate protégé*

Deux échantillons G et H de peuplier (*populus* spp.) de 60 x 60 x 10 $mm^3$ (radial x tangentielle x longitudinale) ont été imprégnés simultanément de PEG 400 et du triisocyanurate protégé suivant :

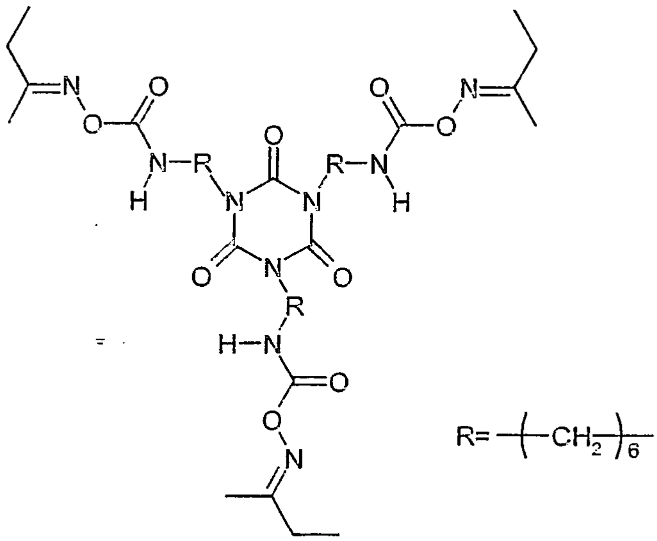

Ce réactif est commercialisé par Rhodia S.A. sous le nom commercial Rhodocoat® WT1000. Pour ce faire, ces échantillons ont été immergés dans une solution aqueuse de PEG 400 dans laquelle le triisocyanurate a été dispersé. Ce mélange a été thermostatisé soit à température ambiante (G) soit à 50°C (H). Les quantités de réactifs ont été ajustées afin que le rapport molaire des fonctions hydroxyles par rapport aux fonctions isocyanates soit égal à 3. Après une immersion de 72h, le bois a été déshydraté en étuve ventilée à 100°C pendant 16h et traité thermiquement à 150°C pendant 30 minutes afin de déprotéger les fonctions isocyanates. Les caractéristiques des échantillons obtenus sont reprises au tableau 7.

**Tableau 7 : Caractéristiques des échantillons de bois imprégnés.**

| Echantillon | (f) T (°C) | (g) $Fw_{PU}$ (%) |
|---|---|---|
| G | 22 | 77 |
| H | 50 | 76 |

(f) température d'imprégnation en °C
(g) fraction en poids de polyuréthanne

La faible perte de masse mesurée après extraction Soxhlet atteste de l'efficacité de greffage et de la formation d'un réseau interpénétré (tableau 8). Quant à la stabilité dimensionnelle, elle est supérieure (atteignant une valeur supérieure à 50%) dans le cas de l'imprégnation à 50°C pour des valeurs de masse volumique proches.

Par ailleurs, les propriétés mécaniques ont été déterminées sous compression, elles restent identiques aux

propriétés du bois naturel non imprégné.

**Tableau 8: Stabilité dimensionnelle, tests d'extraction Soxhlet et masse volumique.**

| Echantillon | (a) Test | (b) $ASE_1$ (%) | (c) $ASE_2$ (%) | (d) $\Delta m$ (%) | (e) $\rho$ ($g.cm^{-3}$) |
|---|---|---|---|---|---|
| G | humidité | $19\pm1$ | $27\pm4$ | 24 | 0.6 |
| | immersion | $42\pm3$ | $36\pm2$ | | |
| H | humidité | $32\pm3$ | $25\pm1$ | 26 | 0.6 |
| | immersion | $57\pm4$ | $34\pm1$ | | |

*Exemple 9- utilisation du Baydur® comme polyisocyanate protégé*

Un échantillon J de peuplier (*populus* spp.) de 60 x 60 x 10 $mm^3$ (radial x tangentielle x longitudinale) a été imprégné simultanément de PEG 400 et d'un triisocyanurate protégé commercialisé par Bayer S.A. sous le nom commercial Bayhydur® VP LS 2310 dont la formule est identique à celle du Rhodocoat® . Pour ce faire, cet échantillon a été immergé dans une solution aqueuse de PEG 400 dans laquelle le triisocyanurate a été dispersé à température ambiante. Les quantités de réactifs ont été ajustées afin que le rapport molaire des fonctions hydroxyles par rapport aux fonctions isocyanates soit égal à 3. Après une immersion de 72h, le bois a été déshydraté en étuve ventilée à 100°C pendant 16h et traité thermiquement à 150°C pendant 30 minutes afin de déprotéger les fonctions isocyanates. Un revêtement polyuréthanne (vernis vitrificateur) a ensuite été appliqué en surface de l'échantillon. La fraction en poids de polyuréthanne obtenue était de 59.3%.

Comme pouvait s'y attendre l'homme de l'art, il s'avère que l'application en surface du revêtement polyuréthanne augmente la stabilité dimensionnelle du bois (voir tableau 9). Les valeurs des ASE atteignent plus de 60% après conditionnement en atmosphère humide similairement aux échantillons précédents, la masse volumique restant largement inférieure à l'unité (en $g.cm^{-3}$).

**Tableau 9 : Stabilité dimensionnelle.**

| *Echanfillon* | (a) *Test* | (b) *$ASE_1$ (%)* | (c) *$ASE_2$ (%)* |
|---|---|---|---|
| J | Humidité | $64\pm12$ | $63\pm10$ |
| | Immersion | $49\pm2$ | $42\pm1$ |

Ainsi que le démontrent les exemples 8 et 9, d'autres polyisocyanates protégés que le carbonyle-biscaprolactame (CBC) peuvent être utilisés dans la composition d'imprégnation selon le procédé de traitement du bois de l'invention, même si les deux polyisocyanates protégés testés ici, le Baydur® et le Rhodocoat® , donnent de moins bons résultats que le carbonyle-biscaprolactame.

En résumé, le procédé de traitement selon la présente invention présente de nombreux avantages par rapport à l'état de la technique.

Un premier avantage certain du procédé selon la présente invention est le gain de temps qu'il permet pour constituer un réseau de polyuréthanne et stabiliser ainsi le bois. Ce gain de temps est dû au moins en partie au fait que l'on utilise pour l'imprégnation du bois un seul et même bain comprenant une composition aqueuse d'imprégnation dans laquelle se trouvent à la fois le polyol et le polyisocyanate.

Un autre avantage très important du procédé de traitement selon l'invention c'est qu'il peut être appliqué directement sur un bois vert ou saturé en eau. En effet, contrairement aux procédés de l'état de la technique à base d'isocyanates, il n'est pas nécessaire ici de déshydrater préalablement le bois, ce qui représente un gain de temps et évite par ailleurs les risques de fissuration du bois associés à une déshydratation.

De plus, outre le gain de temps qu'il permet, le fait que ce procédé puisse s'appliquer à un élément en bois dit « debout » permet de revaloriser des essences dépréciées de par leurs propriétés mécaniques médiocres (i.e. peuplier, pin sylvestre, ...) ; essences qui, étant de faible densité, sont intrinsèquement aisément imprégnables.

En outre, la mise en oeuvre du procédé selon l'invention peut être effectuée dans des conditions de travail améliorées, notamment par rapport au procédé décrit dans le brevet belge BE 799.494 qui produit des vapeurs toxiques, que ce soit en terme de sécurité pour le personnel ou en terme de respect vis-à-vis de l'environnement. Ceci s'explique par le fait que l'imprégnation est réalisée en phase aqueuse, et que les produits de réaction formés ultérieurement lors de la formation du réseau de polyuréthanne ne sont pas toxiques, ni pour l'homme, ni pour l'environnement.

Par ailleurs, en opposition à l'imprégnation en deux étapes' et impliquant la vaporisation du polyisocyanate,

les observations par microscopie électronique à balayage de coupes de bois imprégné par le procédé selon la présente invention, démontrent un profil homogène d'imprégnation et de réticulation sur toute la hauteur/profondeur de l'échantillon.

## Revendications

**1.** Procédé de traitement d' un élément en bois, en particulier en bois dit « debout », comprenant les étapes suivantes .

- imprégnation par immersion'dudit élément de bois dans un bain contenant une composition aqueuse comprenant au moins un premier constituant correspondant à un polyol et au moins un second constituant correspondant au carbonyle-biscaprolactame (CBC) et susceptible de réagir dans certaines conditions avec ledit premier constituant pour former un polyuréthanne, le second constituant étant non réactif vis-2-vis dudit premier constituant et inerte vis-à-vis de l'eau dans cette étape d'imprégnation ;
- retrait du bain d'imprégnation et déshydratation dudit élément de bois ;
- formation d'un réseau de polyuréthanne au sein de l'élément de bois ainsi imprégné lors d'un traitement thermique en faisant réagir ledit premier constituant avec ledit second constituant par une élévation de température.

**2.** Procédé selon la revendication 1, **caractérisé en ce que** le bois de l'élément de bois est à l'état vert ou saturé en eau.

**3.** Procédé selon la revendication 1, **caractérisé en ce que** le premier constituant de la composition d'imprégnation est un polyol hydrosoluble comprenant un ou plusieurs hydrogènes actifs et sélectionné parmi le groupe constitué par les polyéthers mono- et polyols, les polyacryliques mono- et polyols, les polyvinyliques mono- et polyols, les polysaccharides, les dérivés de ceux-ci dans lesquels au moins une fonction hydroxyle est substituée par une fonction thiol ou amine, ainsi que les mélanges et les copolymères de ceux-ci.

**4.** Procédé selon l'une des revendications précédentes, **caractérisé en ce que** le premier constituant de la composition d'imprégnation est un oligomère de poids moléculaire compris entre 100 et 5000, et de préférence entre 200 et 1000.

**5.** Procédé selon l'une des revendications précédentes, **caractérisé en ce que** chacun des premier et second constituants est présent dans la composition aqueuse d'imprégnation à une concentration comprise entre $10^{-3}$ et 5 $mol.l^{-1}$, et de préférence entre 0.1 et 1 $mol.l^{-1}$.

**6.** Procédé selon l'une des revendications précédentes, **caractérisé en ce que** l'étape d'imprégnation est effectuée à une température comprise entre 0°C et 100°C, et de préférence entre 20°C et 60°C.

**7.** Procédé selon l'une des revendications précédentes, **caractérisé en ce que** l'étape d'imprégnation est effectuée à température ambiante.

**8.** Procédé selon l'une des revendications précédentes, **caractérisé en ce que** la durée de l'étape d'imprégnation est comprise entre 10 minutes et 72 heures, et de préférence entre 1 et 24 heures.

**9.** Procédé selon l'une des revendications précédentes, **caractérisé en ce que** l'étape d'imprégnation est effectuée à une pression comprise généralement entre $10^{-3}$ et $10^{2}$ bars, et ce préférence entre 0.1 et 10 bars.

**10.** Procédé selon l'une des revendications précédentes, **caractérisé en ce que** l'étape d'imprégnation est effectuée à pression atmosphérique.

**11.** Procédé selon l'une des revendications précédentes, **caractérisé en ce que** le traitement thermique est réalisé à une température comprise entre 50°C et 250°C, et de préférence entre 100°C et 150°C, et dont la durée est prédéterminée.

**12.** Procédé selon l'une des revendications précédentes, **caractérisé en ce que** la durée du traitement thermique est comprise entre 5 minutes et 5 heures, et de préférence entre 15 minutes et 120 minutes.

**13.** Procédé selon l'une des revendications précédentes, **caractérisé en ce que** le traitement thermique est effectué à une pression comprise généralement entre $10^{-3}$ et $10^{2}$ bars, et de préférence entre 0.1 et 10 bars.

**14.** Procédé selon l'une des revendications précédentes, **caractérisé en ce que** la déshydratation de l'élément en bois est réalisée par chauffage ou par dépressurisation.

**15.** Elément en bois obtenu à l'aide du procédé selon l'une des revendications précédentes.

**16.** Bain ou composition d'imprégnation pour mettre en oeuvre le procédé selon l'une des revendications précédentes, **caractérisé(e) en ce que** ledit bain ou ladite composition est une solution aqueuse comprenant un premier constituant correspondant à un polyol et au moins un second constituant correspondant au carbonyle-biscaprolactame (CBC), ledit second constituant étant inerte vis-à-vis de l'eau et vis-à-vis dudit premier constituant à température ambiante et étant apte, dans des conditions particulières d'utilisation, à réagir avec ledit premier constituant pour former un polyuréthanne.

**17.** Utilisation de l'élément en bois et/ou du bain d'imprégnation selon l'une des revendications 15 ou 16 dans le domaine des revêtements, tels que les revêtements de mur et/ou de sols, les parquets, les plans de travail, les panneaux, et les meubles.

**Claims**

**1.** Method for treating a wooden element, in particular made of end-grained wood, comprising the following steps:

- impregnation by immersion of said wooden element in a bath containing an aqueous composition comprising at least a first constituent corresponding to a polyol and at least a second constituent corresponding to carbonylbiscaprolactam (CBC) and capable of reacting under certain conditions with said first constituent to form a polyurethane, the second constituent being unreactive towards said first constituent and inert towards water in this impregnation step;
- removal from the impregnation bath and dehydration of said wooden element;
- formation of a polyurethane network within the wooden element thus impregnated during a heat treatment by reacting said first constituent with said second constituent by means of a rise in temperature.

**2.** Method according to Claim 1, **characterised in that** the wood of the wooden element is in green state or water-saturated.

**3.** Method according to Claim 1, **characterised in that** the first constituent of the impregnation composition is a water-soluble polyol comprising one or more active hydrogens and selected from the group consisting of mono- and polyol polyethers, mono- and polyol polyacrylics, mono- and polyol polyvinyls, polysaccharides, derivatives thereof in which at least one hydroxyl function is substituted with a thiol or amine function, and also mixtures and copolymers thereof.

**4.** Method according to one of the preceding claims, **characterised in that** the first constituent of the impregnation composition is an oligomer with a molecular weight of between 100 and 5000 and preferably between 200 and 1000.

**5.** Method according to one of the preceding claims, **characterised in that** each of the first and second constituents is present in the aqueous impregnation composition in a concentration of between $10^{-3}$ and 5 $mol.l^{-1}$ and preferably between 0.1 and 1 $mol.l^{-1}$.

**6.** Method according to one of the preceding claims, **characterised in that** the impregnation step is performed at a temperature of between 0°C and 100°C and preferably between 20°C and 60°C.

**7.** Method according to one of the preceding claims, **characterised in that** the impregnation step is performed at room temperature.

**8.** Method according to one of the preceding claims, **characterised in that** the duration of the impregnation step is between 10 minutes and 72 hours and preferably between 1 and 24 hours.

**9.** Method according to one of the preceding claims, **characterised in that** the impregnation step is performed at a pressure generally of between $10^{-3}$ and $10^{2}$ bar and preferably between 0.1 and 10 bar.

**10.** Method according to one of the preceding claims, **characterised in that** the impregnation step is performed at

atmospheric pressure.

**11.** Method according to one of the preceding claims, **characterised in that** the heat treatment is performed at a temperature of between 50°C and 250°C and preferably between 100°C and 150°C, and the duration of which is predetermined.

**12.** Method according to one of the preceding claims, **characterised in that** the duration of the heat treatment is between 5 minutes and 5 hours and preferably between 15 minutes and 120 minutes.

**13.** Method according to one of the preceding claims, **characterised in that** the heat treatment is performed at a pressure generally of between $10^{-3}$ and $10^{2}$ bar and preferably between 0.1 and 10 bar.

**14.** Method according to one of the preceding claims, **characterised in that** the dehydration of the wooden element is performed by heating or by depressurization.

**15.** Wooden element obtained by means of the method according to one of the preceding claims.

**16.** Impregnation bath or impregnation composition for implementing the method according to one of the preceding claims, **characterised in that** said bath or said composition is an aqueous solution comprising a first constituent corresponding to a polyol and at least a second constituent corresponding to carbonylbiscaprolactam (CBC), said second constituent being inert towards water and towards said first constituent at room temperature and being capable, under particular conditions of use, of reacting with said first constituent to form a polyurethane.

**17.** Use of the wooden element and/or of the impregnation bath according to one of claims 15 or 16 in the field of coverings, such as wall and/or floor coverings, parquets, work surfaces, panels and furniture.

**Patentansprüche**

**1.** Verfahren zur Behandlung eines Holzelements, insbesondere eines das "Hirnholz" genannt wird, das die folgenden Schritte umfasst:

- Imprägnierung durch Eintauchen des Holzelements in ein Bad, das eine wässrige Zusammensetzung enthält, die mindestens einen ersten Bestandteil, der einem Polyol entspricht, und mindestens einen zweiten Bestandteil, der Carbonylbiscaprolactam (CBC) entspricht, umfasst, und geeignet ist, unter bestimmten Bedingungen mit dem ersten Bestandteil zu reagieren, um ein Polyurethan zu bilden, wobei der zweite Bestandteil gegenüber dem ersten Bestandteil nicht reaktiv und inert gegenüber Wasser ist in diesem Imprägnierungsschritt;
- Herausnehmen aus dem Imprägnierungsbad und Dehydratation des Holzelements;
- Bildung eines Polyurethannetzes im Innern des so imprägnierten Holzelements durch eine thermische Behandlung, bei der der erste Bestandteil mit dem zweiten Bestandteil durch eine Erhöhung der Temperatur zur Reaktion gebracht wird.

**2.** Verfahren nach Anspruch 1, **dadurch gekennzeichnet, dass** das Holz des Holzelements sich in grünem oder wassergesättigtem Zustand befindet.

**3.** Verfahren nach Anspruch 1, **dadurch gekennzeichnet, dass** der erste Bestandteil der Imprägnierungszusammensetzung ein wasserlösliches Polyol ist, das ein oder mehrere aktive Wasserstoffe umfasst, und ausgewählt ist aus der Gruppe, bestehend aus Polyethermono- und polyolen, Polyacrylmono- und polyolen, Polyvinylmono- und polyolen, Polysacchariden, deren Derivaten, bei denen mindestens eine Hydroxylfunktion durch eine Thiol- oder Aminfunktion substituiert ist, sowie deren Mischungen und deren Copolymeren.

**4.** Verfahren nach einem der vorstehenden Ansprüche, **dadurch gekennzeichnet, dass** der erste Bestandteil der Imprägnierungszusammensetzung ein Oligomer mit einem Molekulargewicht zwischen 100 und 5.000, und vorzugsweise zwischen 200 und 1.000 ist.

**5.** Verfahren nach einem der vorstehenden Ansprüche, **dadurch gekennzeichnet, dass** jeder der ersten und zweiten Bestandteile in der wässrigen Imprägnierungszusammensetzung mit einer Konzentration zwischen $10^{-3}$ und 5 Mol. $1^{-1}$, und vorzugsweise zwischen 0,1 und 1 Mol.$1^{-1}$ vorhanden ist.

6. Verfahren nach einem der vorstehenden Ansprüche, **dadurch gekennzeichnet, dass** der Imprägnierungsschritt bei einer Temperatur zwischen 0 °C und 100 °C, und vorzugsweise zwischen 20 °C und 60 °C durchgeführt wird.

7. Verfahren nach einem der vorstehenden Ansprüche, **dadurch gekennzeichnet, dass** der Imprägnierungsschritt bei Umgebungstemperatur durchgeführt wird.

8. Verfahren nach einem der vorstehenden Ansprüche, **dadurch gekennzeichnet, dass** die Dauer des Imprägnierungsschritts zwischen 10 Minuten und 72 Stunden, vorzugsweise zwischen 1 und 24 Stunden liegt.

9. Verfahren nach einem der vorstehenden Ansprüche, **dadurch gekennzeichnet, dass** der Imprägnierungsschritt bei einem Druck durchgeführt wird, der im Allgemeinen zwischen $10^{-3}$ und $10^{2}$ Bar, und vorzugsweise zwischen 0,1 und 10 Bar liegt.

10. Verfahren nach einem der vorstehenden Ansprüche, **dadurch gekennzeichnet, dass** der Imprägnierungsschritt bei Luftdruck durchgeführt wird.

11. Verfahren nach einem der vorstehenden Ansprüche, **dadurch gekennzeichnet, dass** die thermische Behandlung bei einer Temperatur zwischen 50 °C und 250 °C, und vorzugsweise zwischen 100 °C und 150 °C realisiert wird, und deren Dauer vorbestimmt ist.

12. Verfahren nach einem der vorstehenden Ansprüche, **dadurch gekennzeichnet, dass** die Dauer der thermischen Behandlung zwischen 5 Minuten und 5 Stunden, und vorzugsweise zwischen 15 Minuten und 120 Stunden liegt.

13. Verfahren nach einem der vorstehenden Ansprüche, **dadurch gekennzeichnet, dass** die thermische Behandlung bei einem Druck durchgeführt wird, der im Allgemeinen zwischen $10^{-3}$ und $10^{2}$ Bar, und vorzugsweise zwischen 0,1 und 10 Bar, liegt.

14. Verfahren nach einem der vorstehenden Ansprüche, **dadurch gekennzeichnet, dass** die Dehydratation des Holzelements durch Erwärmung oder durch Druckentlastung realisiert wird.

15. Holzelement, das mit Hilfe des Verfahrens gemäß einem der vorstehenden Ansprüche erhalten wird.

16. Imprägnierungsbad oder -zusammensetzung, um das Verfahren gemäß einem der vorstehenden Ansprüche anzuwenden, **dadurch gekennzeichnet, dass** das besagte Bad oder die besagte Zusammensetzung eine wässrige Lösung ist, die einen ersten Bestandteil umfasst, der einem Polyol entspricht und mindestens einen zweiten Bestandteil, der Carbonylbiscaprolactam (CBC) entspricht, wobei der besagte zweite Bestandteil inert ist gegenüber Wasser und gegenüber dem besagten ersten Bestandteil bei Raumtemperatur und in der Lage ist, unter besonderen Verwendungsbedingungen, mit dem besagten ersten Bestandteil zu reagieren, um ein Polyurethan zu bilden.

17. Verwendung des Holzelements und/oder des Imprägnierungsbads nach einem der Ansprüche 15 oder 16 im Bereich der Beschichtungen, wie etwa Wand- und/oder Bodenbeschichtungen, Parkett, Arbeitsflächen, Schilder und Möbel.

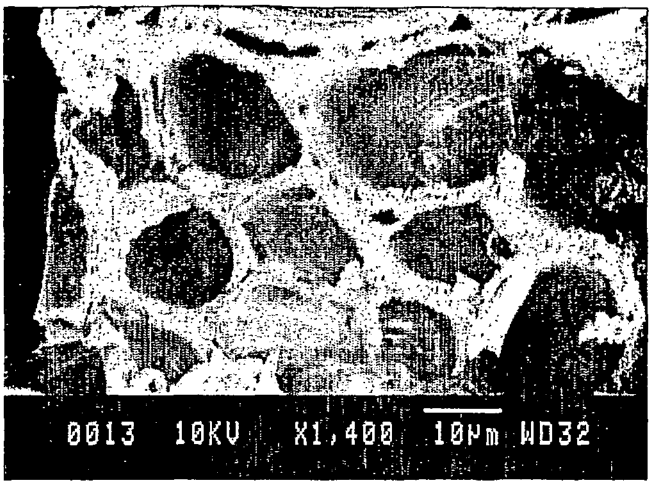


Fig. 1

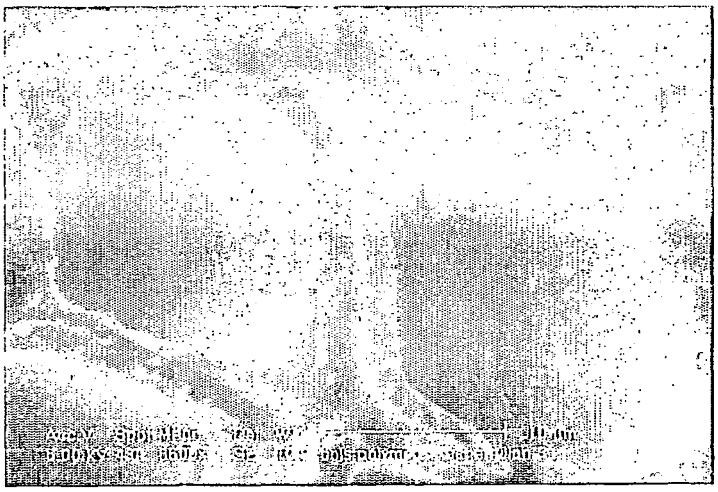

Fig. 2

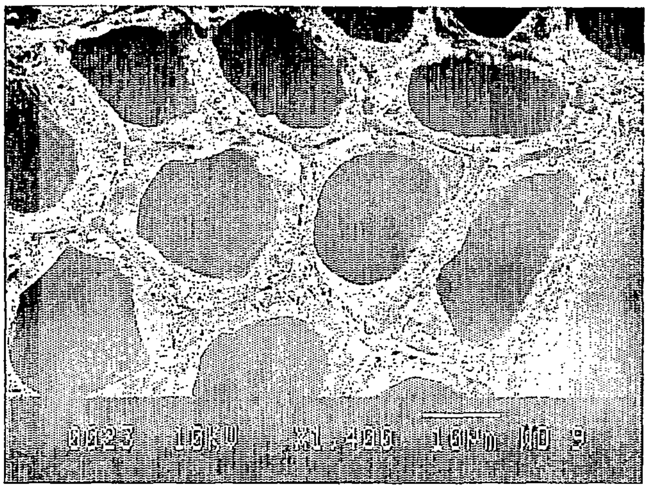


Fig.3